Europäisches Patentamt

European Patent Office

Office européen des brevets

(11) Publication number: **0 078 111**
**B1**

(12) **EUROPEAN PATENT SPECIFICATION**

(45) Date of publication of patent specification: **22.07.87**

(51) Int. Cl.⁴: **F 16 H 1/32, F 16 H 55/08**

(21) Application number: **82305208.9**

(22) Date of filing: **30.09.82**

(54) A speed reduction device employing a face gear train and a method for making same.

(30) Priority: **30.09.81 JP 156366/81**

(43) Date of publication of application:
**04.05.83 Bulletin 83/18**

(45) Publication of the grant of the patent: ·
**22.07.87 Bulletin 87/30**

(84) Designated Contracting States:
**DE FR GB**

(56) References cited:
**GB-A- 22 839**
**GB-A- 104 515**
**US-A-1 763 177**
**US-A-3 258 994**

(73) Proprietor: **Nakamura, Takeichi**
**6-12, Hojo 6-chome Daitoshi**
**Osaka (JP)**

(72) Inventor: **Nakamura, Takeichi**
**6-12, Hojo 6-chome Daitoshi**
**Osaka (JP)**

(74) Representative: **Valentine, Francis Anthony**
**Brinsley et al**
**REDDIE & GROSE 16 Theobalds Road**
**London WC1X 8PL (GB)**

Courier Press, Leamington Spa, England.

EP 0 078 111 B1

## Description

The present invention relates to a speed reduction device employing a bevel or face gear train, and a method for making same. More particularly, the present invention relates to a speed reduction device employing a bevel or face gear train, wherein each of the bevel gears has a uniquely shaped tooth profile whereby the speed reduction device can have an increased power-loading capacity , a prolonged life and a noiseless operation. The present invention also relates to a method for making the above-mentioned speed reduction device, whereby at least one of the meshing pair of bevel gears can have a spherically involuted tooth profile. The method is adapted for mass-production, and is carried out in a ready and economical way.

It is known in the art that a speed reduction device employs a bevel gear train including a nutating gear, but from a practical point of view its performances were problematic; for example, its power loading capacity was limited, and its working life was short. Hitherto, no successful models have been achieved for commercial use. Through a long period of study and research, it has been found that the reason is attributed to the tooth profiles adopted in the bevel gears used therein, and to the method of shaping such tooth profiles. Under the conventional methods it was geometrically impossible to shape quite the same tooth profiles on each of the bevel gears of a meshing pair. Nevertheless, such difficult tooth profiles were demanded for manufacturing speed reduction devices in which bevel or face gear trains were essential. However, this demand was very much frustrated under the conventional methods, and as an alternative choice the seemingly same tooth profiles were formed on each of the meshing gears. But it is needless to say that such false contrivance has proved to be unsuccessful in that the speed reduction device caused malfunction and inadequate performance.

Thus a bevel or face gear construction is proposed in GB—A—22839/14 comprising a speed reduction device employing a gear train, which comprises:

a housing;

an input shaft rotatable mounted in the housing;

an output shaft rotatable mounted in the housing, the input shaft and output shaft being coaxially with each shaft end projecting from an opposite end of the housing;

the input shaft including an intermediate shaft inclined at a predetermined angle to the axis of the input shaft;

a nutating gear rotatably mounted on the intermediate shaft, the nutating gear having face gear teeth at its opposite end faces;

a fixed face end concentric with the input shaft, the fixed face gear being fixed to the housing and having face gear teeth engageable with the face gear teeth on the input side of the nutating gear;

a follower face gear fixed to the output shaft and having face gear teeth engageable with the face gear teeth of the nutating gear at its output side;

the fixed face gear, the face gears of the nutating gear and follower face gear having different numbers of teeth, so as to permit of speed reduction during power transmission from the input shaft to the output shaft.

With a view to providing improved tooth profiles which securely and smoothly engage each other, thereby increasing the load and power transmitting capabilities, a speed reduction device according to the invention is characterised in that for each meshing pair of face gears at the location of maximum mesh the engaged teeth of the two gears the tooth surfaces on the smaller face gear converge at a point beyond the vertices of the pitch cones of the gears and the tooth surfaces of the larger face gear converge at a point inwardly of the vertices of the pitch cones of the gears, the thickness of the meshing teeth being such that they extend along the tooth trace through equal angles, the generators of the pitch comes of the meshing gears coinciding at the location of maximum mesh and at least one of the meshing face gears having a spherically involuted profile.

According to another advantageous aspect of the present invention there is provided a method for making a speed reduction device employing a face gear train as defined in claim 1, the method being characterized by shaping affine spherically involuted tooth profiles on each of the above-mentioned fixed face gears, the face gears of the nutating gear and the follower facer gear by means of a linear-motion cutter, wherein each affine spherically involuted tooth profile has a predetermined pitch cone angle, allowing at least one of the meshing pairs of face gears to be engaged with a pinion lap having a relatively small contact ratio, wherein the pinion lap has a tooth profile negatively shifted from that of the face gear with which the pinion lap is engaged, and then allowing the pinion lap to rotate on its own axis under pressure and slide along the tooth trace of the face gear so as to effect a lapping operation, whereby a spherical involution is formed on at least one of the meshing face gears.

Other objects, features and advantages of the present invention will become more apparent from the following description when taken in connection with the accompanying drawings, which show, for the purpose of illustration only, an embodiment of the speed reduction device according to the present invention.

In the drawings:-

Figure 1 is a schematic cross-section showing a prior art speed reduction device employing a face gear train;

Figure 2 is a cross-section through a speed reduction device according to the present invention;

Figure 3 is a diagrammatical cross-section taken along the tooth traces to show a

**0 078 111**

relationship between a fixed face gear and a nutating gear in a known design;

Figure 4 is a cross-section taken along the line IV—IV in Figure 3;

Figure 5 is a diagrammatical cross-section under the present invention, shown correspondingly to Figure 3;

Figure 6 is a cross-section taken along the line VI—VI in Figure 5;

Figures 7 and 8 are perspective views showing the tooth profiles, wherein a greater part thereof is omitted for simplicity; and

Figure 9 is a diagrammatic view exemplifying a method of making a speed reduction device according to the present invention, particularly showing a process of shaping a tooth profile.

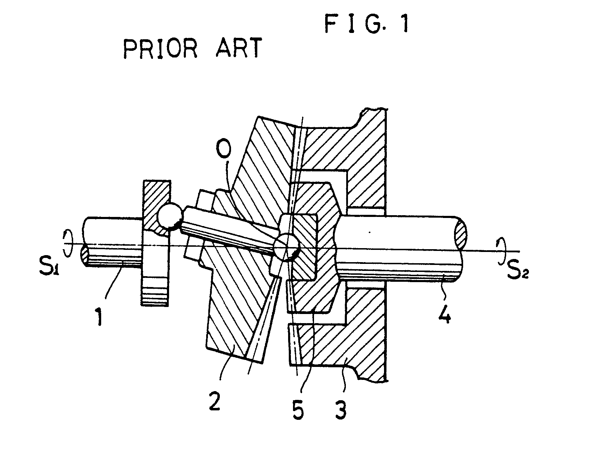

In order to explain the background of the present invention, reference will be more particularly made to a typical example of a speed reduction device employing a face gear train known in the art, shown in Figures 1, 3 and 4. In the embodiment illustrated in Figure 1, when the input shaft 1 is rotated, a nutating gear 2 initiates its nutating motion. The nutating gear 2 is engaged with a fixed gear 3 provided coaxially with the input shaft 1, and also with a follower face gear 5 fixed to the output shaft 4. In this prior art device the vertices of pitch cone of the nutating gear 2 and the fixed bevel gear 3 are accorded at a point O on which the nutating motion is effected. Seemingly, this arrangement ensures a smooth, trouble-free rolling motion between the meshing face gears. However, in order to effect the speed reduction from the input shaft 1 through the output shaft 4, the number of teeth of the nutating gear 2 must be different from that of the fixed face gear 3. If the input shaft 1 is rotated at a speed $S_1$ (r.p.m.), the nutating gear 2 is put into nutating motion at the speed $S_1$, and at the same time, it is rotated on its own axis through the action of the fixed face gear 3, wherein the speed of this rotation is expressed by:

$$S_1 \times 1/(Z_1 - Z_2)$$

where

$Z_1$ is the number of teeth of the nutating gear 2,
$Z_2$ is the number of teeth of the fixed face gear 3

This rotation of the nutating gear is picked up by the follower face gear 5, and is transmitted to the output shaft 4 at a speed expressed by the following formula:

$$S_2 = S_1 \times 1/(Z_1 - Z_2)$$

As evident from the foregoing, the nutating gear 2 and the fixed face gear 3 must have pitch cone angles of the same reference but different numbers of teeth. This necessarily leads to different tooth profiles, which will be fatal for the gears in mesh. Malfunction, heat generation, noise and a short working life are caused. In order to improve such situations, roller, balls and a highly viscous lubricant were used to ensure a smooth meshing of the gears. However, those troubles are due to the fundamental defects in structure, and no solution has been achieved.

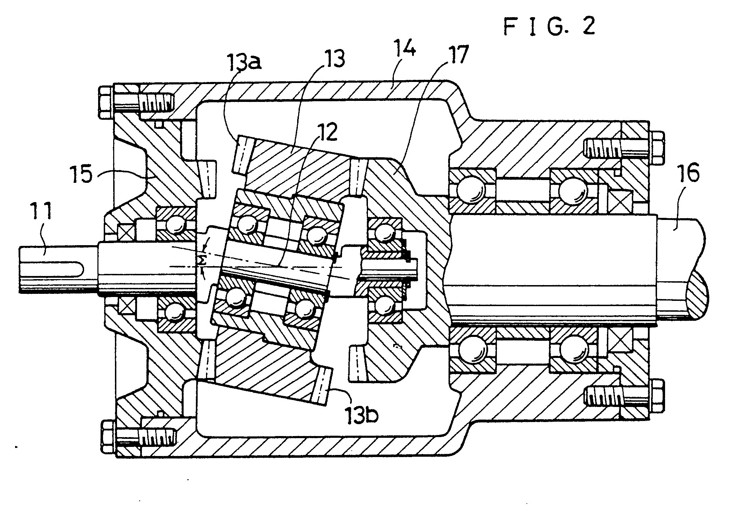

Referring now to the speed reduction device illustrated in Figure 2, the device comprises a housing 14, an input shaft 11 rotatively inserted in one end of the housing 14, and an output shaft 16 rotatively inserted in the opposite end thereof. A power imparted to the input shaft 11 is reduced in speed, and transmitted to the output shaft 16. Inside the casing 14, there is provided an intermediate shaft 12, which is integral with the input shaft 11 but inclined at an angle of $\Sigma$ with respect to the axis thereof. The intermediate shaft 12 is provided with a nutating gear 13 having face gear teeth 13a, 13b at its opposite ends. Opposedly to the nutating gear 13, there is provided a face gear 15 fixed to the housing 14 such that the face gear teeth become concentric of the input shaft 11. The face gear teeth are intended to mesh with the teeth 13a of the nutating gear 13. The output shaft 16 is provided coaxially with the input shaft 11, and is provided with a follower face gear 17 having face gear teeth intended to mesh with the teeth 13b of the nutating gear 13. The power from the input shaft 11 is transmitted to the follower face gear 17 through the nutating gear 13.

Suppose that the number of teeth in the fixed face gear 15 is $Z_1$. Likewise, suppose that the numbers of teeth in the face gears 13a, 13b and 17 are respectively $Z_2$, $Z_3$ and $Z_4$. The rotating speed (r.p.m.) of the input shaft 11 is presupposed to be $S_1$, which, after having been reduced to $S_2$, is transmitted to the output shaft 16. When the input shaft 11 is rotated at the speed $S_1$, the nutating gear 13 starts its nutating motion at the speed $S_1$ through the action of the intermediate shaft 12. While it is in the nutating motion, the nutating gear 13 starts its own rotation through the meshing of the face gears 13a and 15, wherein the rotation of the nutating gear 13 is numerically expressed by the following formula:

$$S_1 \times \frac{Z_2 - Z_1}{Z_2}$$

The rotation of the nutating gear 13 is transmitted to the follower face gear 17, commonly called "picked up", wherein the rotation of the follower face gear 17 is numerically expressed by the following formula:

$$S_1 \times \frac{Z_2 - Z_1}{Z_2} \times \frac{Z_3}{Z_4}$$

The follower face gear 17 is rotated on its own axis in accordance with the nutating motion of the nutating gear 13, wherein the rotation is numerically expressed by the following formula:

$$S_1 \times \frac{Z_4 - Z_3}{Z_4}$$

In this way, when the input shaft 11 is rotated at the speed $S_1$, it is reduced to the speed $S_2$, which can be numerically expressed by:

$$S_2=S_1\times(\frac{Z_2-Z_1}{Z_2}\times\frac{Z_3}{Z_4}+\frac{Z_4-Z_3}{Z_4})$$

$$=S_1\times(1-\frac{Z_1\ Z_3}{Z_2\ Z_4})$$

The rotation of the follower face gear 17 is transmitted at the reduced speed to the output shaft 16.

The foregoing principle is the basic idea underlying the present invention. In addition, it must be noted that each face gear has a uniquely shaped tooth profile. Take for an example the nutating gear 13 and the fixed face gear 15:

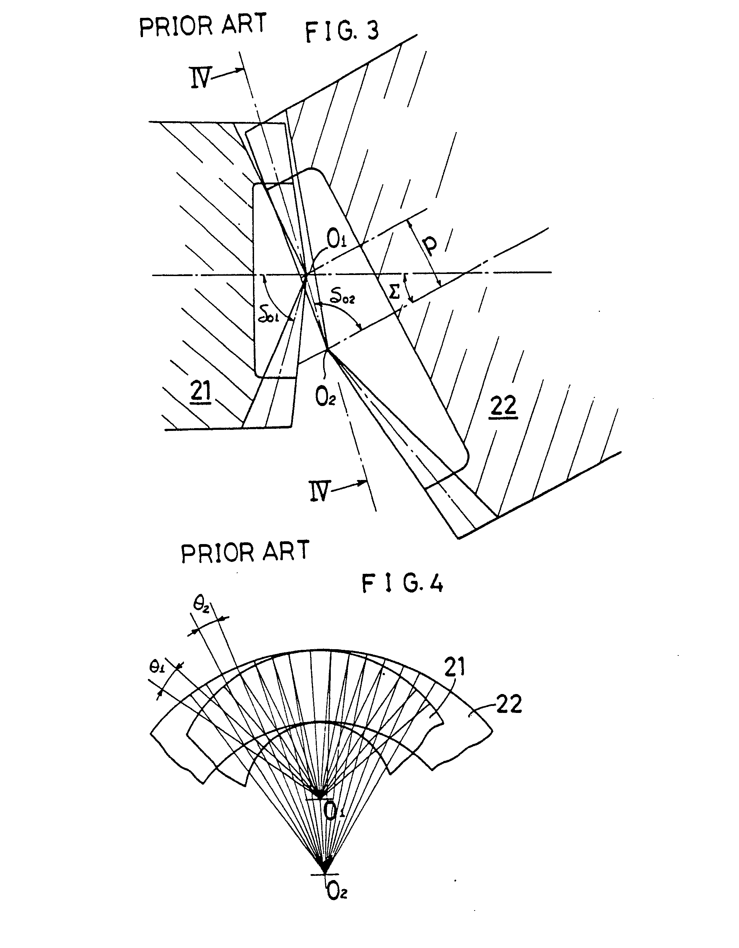

In order to explain the background of the present invention, reference will be made again to the prior art illustrated in the drawings. Figure 3 shows one example of the prior art face gear train, which consists of a fixed face gear 21 and a nutating gear 22. These gears are known types, normally used for a gear train. Figure 3 shows a cross-section taken along the tooth traces at the maximal osculated point of contact of the two gears 21 and 22. In this gear train the vertices of the addendum cone, pitch cone and deddendum cone coincide at a point $O_1$ or $O_2$ on the axis either of the gears 21 or 22. This means that the tooth surface of each gear 21, 22 is converged on the vertex $O_1$ or $O_2$ of pitch cone. When two gears mesh with each other at an angle $\Sigma$ the pitch cone angles of each face gear $\delta_{01}$, $\delta_{02}$ will be readily calculated from the angle of inclination $\Sigma$ and the numbers of teeth of the gears $Z_1$, $Z_2$. specifically,

$$\tan \delta_{01}=\frac{Sin\ \Sigma}{Z_2/Z_1+Cos\ \Sigma}$$

$$\tan \delta_{02}=\frac{Sin\ \Sigma}{Z_1/Z_2+Cos\ \Sigma}$$

When two face gears mesh with each other, each face module m must be equal at the outer end of the pitch cones, commonly known as the reference Pitch Circle Diameter P.C.D. Therefore, suppose that the fixed face gear 21 has a smaller number of teeth $Z_1$ than the number of teeth $Z_2$ in the nutating gear 22, the following equation is established:

$$P=m(Z_2-Z_1)/2$$

where P is the distance between the vertices $O_1$ and $O_2$,

As evident from the foregoing, if the speed reduction device aimed at by the present invention is constructed with conventional facegears the design itself will have no problem. However, from a practical point of view it will prove to be worthless or at least serious problems will be encountered. Figure 4 shows another aspect of the prior art gearing illustrated in Figure 3. The face gears 21, 22 have equal face modules m, m, but the vertices of their pitch cones $O_1$, $O_2$ are distant from each other by P. In such cases their tooth thicknesses (or space thicknesses) are inclined at different angles $\theta_1$, $\theta_2$ with respect to their respective tooth traces. When $Z_1$ is smaller than $Z_2$, the relationship $\theta_1>\theta_2$ results. Accordingly, the bevel gears 21 and 22 come into point-to-point contact with each other only at the outer end of the pitch cones (the reference P.C.D.), and fail to mesh with each other at the interior end thereof. In the practical application this will cause malfunction of the device, heat generation, noise problems, and fatally, the power loading capacity is immensely reduced. In addition, the working life is shortened. From a practical point of view such a gearing must be condemned as worthless.

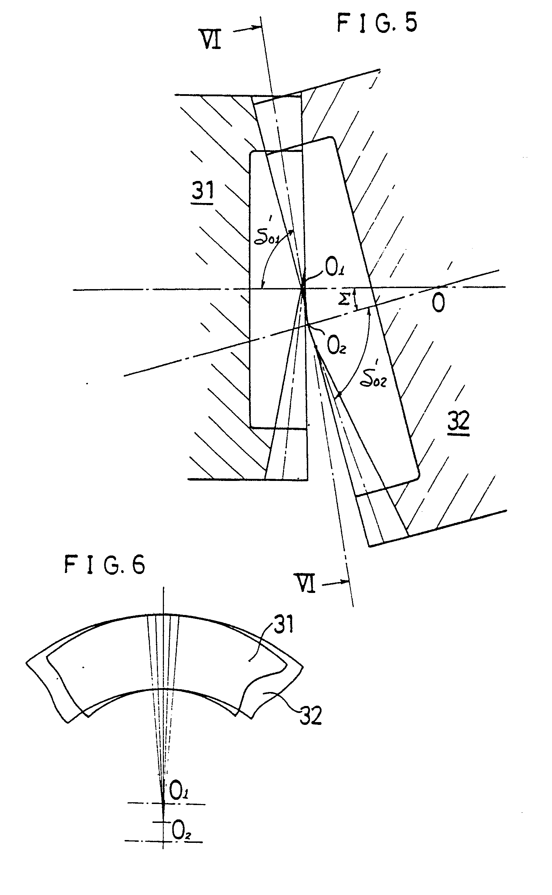

Now in Figure 5 a fixed face gear 31 has a smaller number of teeth and a pitch cone angle $\delta'_{01}$, which is larger than an ordinary pitch cone angle $\delta_{01}$. In addition, this bevel gear 31 has a tooth profile in which the tooth surfaces converge at a point outward of the vertex of its pitch cone $O_1$. A nutating gear 32 has a greater number of teeth, and has a pitch cone angle $\delta'_{02}$, which is smaller than an ordinary pitch cone angle $\delta_{02}$. In addition, this nutating gear 32 has a tooth profile in which the tooth surfaces converge at a point inward of the vertex of its pitch cone $O_2$. It will be appreciated from Figure 6 that owing to the tooth profiles designed in this way the tooth thicknesses (or space thicknesses) of the two gears 31 and 32 are inclined at the equal angles $\theta_1$, $\theta_2$ with respect to their respective tooth traces. In addition, it will be appreciated from Figure 5 that the tooth profiles permit the generators of pitch cones and the points of convergence of the tooth surfaces to be in agreement only at the maximal osculated point of contact.

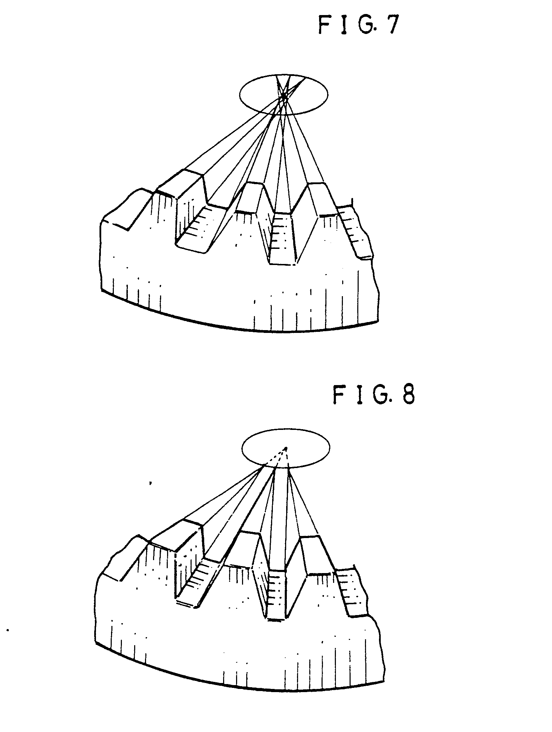

Figures 7 and 8 show two situations; in which the tooth surfaces converge at a point outward of the vertex of pitch cones, and in which they converge at a point inward thereof. In either case the two gears can mesh fully without any gap at the maximal osculated point of contact along the whole range of the tooth traces. In this situation, however, to effect a nutating motion and a rotation at one time on the part of either gear, at least one of them must have spherically involuted tooth profile.

Now, reference will be made to a method of forming spherical involution on the face gear:

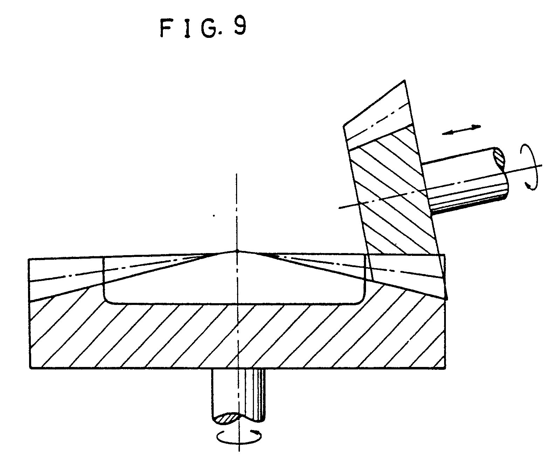

Initially, an affine spherical involution is formed on the gear by a linear-motion cutter. Subsequently, a pinion-like lap having a thread of relatively small contact ratio (e.g. 1 to 1.5) on which the mating teeth are negatively shifted. In this way a lapping operation is carried out as shown in Figure 9. In the lap the tooth thickness is smaller than the space thickness because of the negative shifting. This facilitates to enable the lap to slide on the gear being processed while it is in rotation, wherein the lap is preferably slid along the tooth traces of the gear. It is easy to change the angle of contact between the lap and the gear, and by adding an adequate amount of pressure to the lap, the desired spherical involution is formed on the gear. The pinion-like lap can be made of soft metal, such as aluminium alloy, and the numerical difference in the numbers of teeth between the lap and the gear can be made an odd number. In addition, the ratio in the number of teeth of one to the other can be selected any figure except for integers. As a result, as the mutually meshing threads smoothly advance, a pitch error due to an index error occurring when the linear-motion cutter initially cuts the threads on the gear, will be effectively corrected.

A lapping agent can be used, preferably as an admixture with a suitable medium, which is applied to the contacting surfaces of the gear and the lap. Most of the agent remains on the lap, thereby protecting it against abrasion in excess.

In the above-mentioned embodiment the spherical involution is formed on one of the meshing pair of gears, but although it is not absolutely necessary, the spherical involution can be formed on both gears in mesh. When it is formed on one gear, it is preferably on the nutating gear. In this case the contact of the teeth becomes facial against the spherically involuted surface defined by the involution and the tooth traces, whereby the contact of teeth is made full in accordance with the applied pressure with the addition of the acceptability provided by the tooth surface.

The increase in the pitch cone angle $\delta'_{01}$ of the fixed face gear 31 over the pitch cone angle $\delta_{01}$ ordinarily calculated is quite optionally selected, provided that the generators of pitch cones and the points of convergence of the tooth surfaces are in agreement with each other at the maximal osculated point of contact. The same applied to the decrease in the pitch cone angle $\delta'_{02}$ of the nutating gear 32 to the pitch cone angle $\delta_{02}$ ordinarily calculated under the fulfillment of the same condition. In forming the spherical involution in the above-mentioned manner, if a shortened period of time is wanted for the lapping operation, the amounts of the increase and decrease are preferred to be equal, where the initial affine spherical involution can be approximated to the desired spherical involution as near as possible.

In the above-mentioned embodiment straight-cut face gears are described but any kind of face gears, such as skew face gears and spiral face gears, can be effectively employed.

## Claims

1. A speed reduction device employing a face gear train, which comprises:
a housing (14);
an input shaft (11) rotatable mounted in the housing (14);
an output shaft (16) rotatable mounted in the housing, the input shaft (11) and output shaft (16) being coaxially with each shaft end projecting from an opposite end of the housing;
the input shaft (14) including an intermediate shaft (12) inclined at a predetermined angle ($\Sigma$) to the axis of the input shaft;
a nutating gear (13) rotatably mounted on the intermediate shaft (12), the nutating gear having face gear teeth (13a, 13b) at its opposite end faces;
a fixed face end (15) concentric with the input shaft, the fixed face gear (15) being fixed to the housing (14) and having face gear teeth engageable with the face gear teeth (13a) on the input side of the nutating gear;
a follower face gear (17) fixed to the output shaft (16) and having face gear teeth engageable with the face gear teeth (13b) of the nutating gear at its output side;
the fixed face gear, the face gears of the nutating gear and the follower face gear having different numbers of teeth, so as to permit of speed reduction during power transmission from the input shaft to the output shaft;
characterised in that for each meshing pair of face gears (15, 13a and 13b, 17), at the location of maximum mesh of the engaged teeth of the two gears the tooth surfaces on the smaller face gear (15 and 17, 31) converge at a point ($O_1$) beyond the vertices of the pitch cones of the gears and the tooth surfaces of the larger face gear (13a and 13b, 32) converge at a point ($O_2$) inwardly of the vertices of the pitch cones of the gears, the thickness of the meshing teeth being such that they extend along the tooth trace through equal angles ($\theta_1$, $\theta_2$) the generators of the pitch cones of the meshing gear coinciding at the location of maximum mesh and at least one of the meshing face gears having a spherically involuted profile.

2. A speed reduction device as defined in claim 1, wherein the gear mating with the gear having said spherical involuted tooth profile has its tooth profile shaped negatively of said spherical involution.

3. A method of making a speed reduction device employing a face gear train as defined in claim 1, wherein said gear train includes a fixed face gear (15) provided concentrically of the input shaft (11), face gears (13a, 13b) provided at opposite end faces of a nutating gear (13) rotatively carried on an intermediate inclined shaft (12) on said input shaft (11), and a follower face gear (17) fixed to the output shaft (16), and wherein said fixed face gear (15) and the face gear (13a) of said nutating gear (13) at its input side constitute a meshing pair, and said follower face gear (17) and the face gear (13b) of said nutating gear (13) at its output side constitute another meshing pair, the method comprising:
shaping affine spherical involuted tooth profiles on each of said face gears by means of a linear-motion cutter, wherein each of said spherical involuted tooth profiles has a predetermined pitch cone angle ($\delta_{01}$, $\delta_{02}$);

applying a pinion-like lap to at least one of said each meshing pair of face gears, wherein said pinion-like lap has a relatively small contact ratio, and also has a tooth profile negatively shifted from that of the applying face gear; and

rotating said pinion-like lap under pressure and sliding same along the tooth trace of said face gear so as to effect a lapping operation, whereby a desired spherical involution is formed on at least one of each meshing pair of face gears.

4. A method of making a speed reduction device as defined in claim 3, further comprising

placing the mating face gear of the applying face gear into engagement therewith, wherein the applying face gear has a finished spherically involuted tooth profile;

rotating said mating face gear under pressure on said applying face gear, and putting same into a nutating motion, with a lapping agent is applied therebetween, whereby the spherical involution of said applying bevel gear is negatively formed on the mating face gear.

**Patentansprüche**

1. Geschwindigkeitsherabsetzungsvorrichtung unter Anwendung eines Kegelradgetriebes, mit einem Gehäuse (14) einer Eingangswelle (11), die drehbar in das Gehäuse (14) eingebaut ist, einer Ausgangswelle (16), die drehbar in das Gehäuse eingebaut ist, wobei die Eingangswelle (11) und die Ausgangswelle (16) mit ihren Wellenenden koaxial aus entgegengesetzten Enden des Gehäuses vorstehen, wobei die Eingangswelle (14) eine Zwischenwelle (12) aufweist, die in einem vorbestimmten Winkel ($\Sigma$) zu der Achse der Eingangswelle geneigt ist, ferner mit einem Nutationsrad (13), das drehbar auf der Zwischenwelle (12) sitzt und an seinen entgegengesetzten Stirnflächen Kegelradzähne (13a, 13b) hat, einem feststehenden Kegelrad (15), das konzentrisch zu der Eingangswelle angeordnet und an dem Gehäuse (14) befestigt ist und Kegelradzähne aufweist, die mit den Kegelradzähnen (13a) an der Eingangsseite des Nutationsrades kämmen können, einem getriebenen Kegelrad (17), das fest an der Ausgangswelle (16) sitzt und Kegelrad-zähne hat, die mit den Kegelradzähnen (13b) des Nutationsrades an dessen Ausgangsseite kämmen konnen, wobei das feststehende Kegelrad, die Kegelräder des Nutationsrades und das getriebene Kegelrad eine unterschiedliche Anzahl von Zähnen aufweisen, so daß während der Kraftübertragung von der Eingangswelle zu der Ausgangswelle die Geschwindigkeit herabgesetzt werden kann, dadurch gekennzeichnet, daß bei jedem kämmenden Paar von Kegelrädern (15, 13a und 13b, 17) an der Stelle des maximalen Eingriffs der kämmenden Zähne der beiden Räder die Zahnoberflächen auf dem kleineren Kegelrad (15 und 17, 31) an einem Punkt ($O_1$) hinter den Scheitelpunkten der Teilkegel der Räder zusammenlaufen und die Zahnoberflächen des größeren Kegelrades (13a und 13b, 32) an einem Punkt ($O_2$) im Inneren der Scheitelpunkte der Teilkegel der Rader zusammenlaufen, wobei die Dicke der kämmenden Zähne derart ist, daß sie sich entlang der Zahnlinie über gleiche Winkel ($\theta_1$, $\theta_2$) erstreckt, die Erzeugenden der Teilkegel der kämmenden Räder an der Stelle des maximalen Eingriffs zusammenfallen und wenigstens eines der kämmenden Kegelräder ein Kugelevolventenprofil hat.

2. Geschwindigkeitsherabsetzungsvorrichtung nach Anspruch 1, dadurch gekennzeichnet, daß das Rad, das zu dem Rad mit dem Kugelvolventenzahnprofil gehört, ein Zahnprofil hat, das umgekehrt zu dem Kugelvolventenprofil geformt ist.

3. Verfahren zur Herstellung einer Geschwindigkeitsherabsetzungsvorrichtung unter Anwendung eines Kegelradgetriebes nach Anspruch 1, wobei das Kegelradgetriebe ein feststehendes Kegelrad (15), das konzentrisch zu der Eingangswelle (11) angeordnet ist, Kegelräder (13a, 13b) an entgegengesetzten Enden eines Nutationsrades (13), das drehbar auf einer geneigten Zwischenwelle (12) an der Eingangswelle (11) gehalten ist, und eine getriebenes Kegelrad (17) aufweist, das fest an der Eingangswelle (16) angesetzt ist, une wobei das feststehende Kegelrad (15) und das Kegelrad (13a) des Nutationsrades (13) an dessen Eingangsseite ein kämmendes Paar bilden, und wobei das getriebene Kegelrad (17) und das Kegelrad (13b) des Nutationsrades (13) an der Ausgangsseite ein weiteres kämmendes Paar bilden, gekennzeichnet durch folgende Schritte:

Formen affiner Kugelevolventenzahnprofile an jedem der Kegelräder mittels eines eindimensional bewegten Fräsers, wobei jedes der Kugelevolventzahnprofile einen vorbestimmten Wälzflächen-Kegelwinkel ($\delta_{01}$, $\delta_{02}$) hat, Ansetzen eines zahnritzelähnlichen Läppwerkzeuges an wenigstens einem der kämmenden Kegelradpaare, wobei das zahnritzelähnlichen Läppwerkzeug ein relativ kleines Kontaktverhältnis hat und ein Zahnprofil, das von dem des anzusetzenden Kegelrades negativ versetzt ist, und

Drehen des zahnritzelähnlichen Läppwerkkzeuges unter Druck und Schleifen desselben entlang der Zahnlinie des Kegelrades, um so einen Läppvorgang auszuführen, wobei ein gewünschtes Kugelevolventenprofil an wenigstens einem der kämmenden Kegelradpaare ausgebildet wird.

4. Verfahren nach Anspruch 3, dadurch gekennzeichnet, daß das zu dem anzusetzenden Kegelrad zugehörige Kegelrad in Eingriff mit diesem gebracht wird, wobei das anzusetzende Kegelrad ein fertiggestelltes Kugelevolventenzahnprofil hat, und daß das zugehörige Kegelrad unter Druck auf dem anzusetzenden Kegelrad gedreht und in eine Nutationsbewegung versetzt wird, wobei ein Läppmittel zwischen ihnen verwendet wird, wodurch das Kugelevolventenprofil des anzusetzenden Kegelrades negative an dem zugehörigen Kegelrad ausgebildet wird.

## Revendications

1. Un dispositif réducteur de vitesse employant un train d'engrenages coniques plats, qui comprend:

un carter (14);

un arbre d'entrée (11) monté de façon tournante dans le carter (14);

un arbre de sortie (16) monté de façon tournante dans le carter, l'arbre d'entrée (11) et l'arbre de sortie (16) étant disposés de façon coaxiale avec chaque extrémité d'axe dépassant d'une extrémité opposée du carter;

l'arbre d'entrée (14) comprenant un arbre intermédiaire (12) incliné d'un angle prédéterminé (Σ) par rapport à l'axe de l'arbre d'entrée;

une roue d'engrenage à mouvement de nutation (13) montée de façon tournante sur l'arbre intermédiaire (12), la roue d'engrenage à mouvement de nutation comportant des dents d'engrenage conique plat (13a, 13b) sur ses faces d'extrémités opposées;

une roue d'engrenage conique plat fixe (15), coaxiale par rapport à l'arbre d'entrée, la roue d'engrenage conique plat fixe (15) étant fixée au carter (14) et comportant des dents d'engrenage conique plat qui peuvent engrener les dents d'engranage conique plat (13a) qui se trouvent sur la face d'entrée de la roue d'engrenage à mouvement de nutation;

une roue d'engrenage conique plat menée (17) qui est fixée à l'arbre de sortie (16) et qui comporte des dents d'engrenage conique plat pouvant engrener avec les dents d'engranage conique plat (13b) de la roue d'engrenage à mouvement de nutation qui se trouvent du côté de sortie de cette dernière;

la roue d'engrenage conique plat fixe, les engrenages coniques plats de la roue d'engrenage à mouvement de nutation et la roue d'engrenage conique plat menée ayant des nombres de dents différents, de façon à permettre une réduction de vitesse au cours de la transmission d'énergie de l'arbre d'entrée vers l'arbre de sortie;

caractérisé en ce que pour chaque paire de roues d'engrenage conique plat qui engrènent (15, 13a et 13b, 17), à la position d'engrènement maximale des dents accouplées des deux roues d'engrenage, les surfaces des dents sur la plus petite roue d'engrenage conique plat (15 et 17, 31) convergent en un point $(O_1)$ situé au-delà des sommets des cônes primitifs des roues d'engrenage, et les surfaces de dents de la plus grande roue d'engrenage conique plat (13a et 13b, 32) convergent en un point $(O_2)$ situé en-deça des sommets des cônes primitifs des roues d'engrenage, l'épaisseur des dents qui engrènent étant telle que ces dents s'étendent le long de la courbe des dens sur des angles égaux $(\theta_1, \theta_2)$, les génératrices des cônes primitifs des roues d'engrenage qui engrènent coïncidant à la position d'engrènement maximale, et l'une au moins des roues d'engrenage conique plat qui engrènent ayant un profil en développante sphérique.

2. Un dispositif réducteur de vitesse selon la revendication 1, dans lequel le profil de dent de la roue d'engrenage qui engrène avec la roue d'engrenage ayant le profil de dent en développante sphérique précité, a une forme complémentaire de la développante sphérique précitée.

3. Un procédé de fabrication d'un dispositif réducteur de vitesse employant un train d'engrenages coniques plats selon la revendication 1, dans lequel ce train d'engrenages comprend une roue d'engrenage conique plat fixe (15) montée en position coaxiale par rapport à l'arbre d'entrée (11), des engrenages coniques plats (13a, 13b) formés sur des faces d'extrémités opposées d'une roue d'engrenage à mouvement de nutation (13), montée de façon tournante sur un arbre intermédiaire incliné (12) sur l'arbre d'entrée (11), et une roue d'engrenage conique plat menée (17), fixée à l'arbre de sortie (16), et dans lequel la roue d'engrenage conique plat fixe (15) et l'engrenage conique plat (13a) qui se trouve du côté d'entrée de la roue d'engrenage à mouvement de nutation (13) constituent une paire engrenée, et la roue d'engrenage conique plat menée (17) et l'engrenage conique plat (13b) qui se trouve du côté de sortie de la roue d'engrenage à mouvement de nutation (13) constituent une autre paire engrenée, le procédé comprenant les opérations suivantes:

on forme des profils de dents en développante sphérique affine sur chacune des roues d'engrenage conique plat, au moyen d'un outil de coupe à mouvement linéaire, chacune des profils de dents en développante sphérique ayant un angel de cône primitif prédéterminé $(\delta_{01}, \delta_{02})$;

on applique un rodoir semblable à un pignon sur l'une au moins des paires de roues d'engrenage conique plat qui engrènent, ce rodoir semblable à un pignon ayant un rapport de contact relativement faible et ayant également un profil de dent décalé de façon négative par rapport à celui de la roue d'engrenage conique plat associée; et

on fait tourner sous pression le rodoir semblable à un pignon et on le fait glisser le long de la courbe de dent de la roue d'engrenage conique plat, de façon à effectuer une opération de rodage, ce qui a pour effet de former une développante sphérique désirée sur l'une au moins des roues de chaque paire de roues d'engrenage conique plat qui engrènent.

4. Un procédé de fabrication d'un dispositif réducteur de vitesse selon la revendication 3, comprenant en outre les opérations suivantes:

on accouple mutuellement la roue d'engrenage conique plat traitée et la roue d'engrenage conique plat qui lui est associée, la roue d'engrenage conique plat traitée ayant un profil de dent en développante sphérique fini;

on fait tourner sous pression la roue d'engrenage conique plat associée sur la roue d'engrenage conique plat traitée, et on lui communique un mouvement de nutation, avec l'application d'un agent de rodage entre elles, grâce à quoi la développante sphérique de la roue d'engrenage conique traitée est formée de façon complémentaire sur la roue d'engrenage conique plat associée.

**0 078 111**

# F I G. 1

PRIOR ART

S₁ ... S₂

1  2  5  3  4

O

0 078 111

F I G. 2

PRIOR ART    FIG. 3

PRIOR ART

FIG. 4

F I G. 5

F I G. 6

4

## F I G. 7

## F I G. 8

# F I G. 9